# EUROPEAN PATENT SPECIFICATION

(11) **EP 3 358 180 B1**
(45) Date of publication and mention of the grant of the patent: **24.02.2021**
(21) Application number: 18152292.1
(22) Date of filing: 18.01.2018
(51) Int. Cl.: F03D 80/40, C09K 5/06

(54) **USE OF PHASE CHANGE MATERIALS TO DELAY ICING OR TO CAUSE DE-ICING IN WIND TURBINES**
GEBRAUCH VON PHASENÄNDERUNGSMATERIALIEN, UM EISSCHICHT ZU VERZÖGERN ODER ZUM ENTEISEN VON WINDTURBINEN
UTILISATION DE MATÉRIELS DE CHANGEMENT DE PHASE POUR RETARDER GLAÇAGE OU CAUSER DÉGIVRAGE DANS ÉOLIENNES

(30) Priority: 01.02.2017 ES 201700079
(43) Date of publication of application: 08.08.2018
(73) Proprietor: SIEMENS GAMESA RENEWABLE ENERGY INNOVATION & TECHNOLOGY, S.L., 31621 Sarriguren (Navarra) (ES)
(72) Inventor: MARTINEZ GOITANDIA, Amaia, 20600 Eibar (ES); BLANCO MIGUEL, Miren, 20600 Eibar (ES); MUÑOZ BABIANO, Almudena, 28043 Madrid (ES); GARCIA MIGUEL, Olatz, 48170 Zamudio (ES)
(74) Representative: Aspacher, Karl-Georg

(56) References cited:
- WO-A1-2006/009406
- WO-A1-2013/184424
- WO-A1-2015/094917
- US-A1- 2013 032 316

## Description

### Field of the Invention

The present invention generally relates to the use of phase change materials (PCMs) to delay icing or to cause de-icing. The use of materials of this type is particularly contemplated for this purpose in wind-driven power generators. Furthermore, the method for delaying icing or causing de-icing by means of incorporating the PCMs into different wind-driven power generator components is contemplated. The document US2013032316 A1 describes the use of PCMs in various applications including wind turbines where they are used to inhibit ice formation.

### Background of the Invention

Wind-driven power generator blades installed in cold climates and at high altitudes are exposed to icing and problems of ice growth and build-up of ice. This phenomenon affects the design of a wind-driven power generator in different ways: icing will have serious effects on aerodynamics and will also affect the structural behavior of the turbine. The effects of temperature, and particularly the formation of ice masses in the structure, can change the natural frequencies of wind-driven power generator blades, bringing about dynamic problems in the entire turbine, and therefore reducing the annual energy production (AEP) and negatively affecting the power curve. In addition, if the power curve is too low, ice adhesion can even generate unscheduled shutdowns, which severely affects energy production. Furthermore, the control system can be affected and control instruments can even freeze or ice over, providing incorrect information to the turbine control system.

The structural integrity of the turbine can be affected by the significant imbalance caused by asymmetrical icing due to resonances caused by changes in natural frequencies of the components, exceeding designed fatigue loads and giving rise to unscheduled shutdowns, with the corresponding increase in operational expenditures (OPEX). Furthermore, the safety of the wind turbine and of its surrounding area will also be affected by icing or, generally, by operating in a cold climate. Detached ice fragments, or even large pieces of ice that may fall from the rotor, can injure people or animals, or cause material damage. There are even laws in some countries that require shutting down wind-driven power generators in the presence of ice given the safety issues mentioned above, with the subsequent loss of revenue.

Various anti-icing and de-icing methods have been developed in the state of the art, such as those methods based on nanocoatings and other nanostructured surfaces or active de-icing systems based on heatable fabrics, for example.

There are certain strategies based on biomimetics (Tak Sing Wong et al. "Bioinspired self-repairing slippery surfaces with pressure-stable omniphobicity" (2011) Nature 477,443-447*)* that deal with different aspects such as, for example, the development of omniphobic surfaces that are so slippery that they prevent icing, inspired by carnivorous plants, or the development of superhydrophobic surfaces, combining surface roughness with low surface energy and a micro- and nanoscale fractal dimension, such as the lotus flower *(*Jianyong Lv et al. "Bio-inspired strategies for anti-icing" (2014) ACS Nano 8 (4), pp. 3152-3169*;* Michael J. Kreder et al. "Design of anti-icing surfaces: smooth, textured or slippery?" (2016) Nature Reviews Materials, 1*;* Kshitij C. Jha et al. "On modulating interfacial structure towards improved anti-icing performance" (2016) Coating 6 (1), 3*).*

Phase change materials (PCMs) are used as materials for thermal energy storage in different fields of application, depending on the working range of the selected PCM. PCMs are substances with high heats of fusion that melt and solidify at a specific temperature, storing and releasing large amounts of thermal energy. When the material freezes, it releases energy in the form of latent heat of crystallization, and when it melts, it stores heat in the form of latent heat of fusion. This phenomenon is due to the fact that a phase change involves large amounts of heat without the temperature of the material changing. Depending on their composition, they are classified as follows:
- Organic (paraffins or non-paraffins such as esters, alcohols or acids)
- Inorganic (hydrated or metal salts)
- Eutectic (organic-organic; organic-inorganic; inorganic-inorganic)

In recent years, PCMs have raised a lot of interest on the energy market because unlike conventional storage materials, such as sensible heat storage materials, PCMs adsorb and release heat at a virtually constant temperature. Furthermore, they are capable of storing between 5-14 times more heat per unit of volume.

PCMs are used in different industrial sectors as attemperators, such as in construction, for example. However, the only references found referring to the use of PCMs for anti-icing are the following:
- The addition/introduction of PCMs into liquids confined between the solid surface and the ice to reduce ice adhesion (lubricating film) (Michael Berger et al. "Anti-icing strategies inspired by nanotechnology and biology" 18 March 2014 [online] available at http://www.nanowerk.com/spotlight/spotid=34823.php*).* However, this strategy has the drawback that the liquid disappears from the solid surface over time, so the efficacy of this technology can be limited over time. Unlike this strategy, the approach proposed in the present invention uses substances which can be confined or chemically anchored in the materials of wind-driven power generators, such as, for example, in the paint, which is what comes into contact with surface water and ice.
- Coating based on PCMs combined with low surface energy materials experiencing a solid-solid phase change with the subsequent change in volume (it expands at temperatures less than 0°C) which acts by breaking the deposited layer of ice (Brian Dixon et al. "Novel Phase Change Material Icephobic Coating for Ice Mitigation in Marine Environments" The 12th Annual General Assembly of IAMU [online] available at http://iamu-edu.org/wp-content/uploads/2014/07/Novel-Phase-change-Material-lcephobic-Coating-for-Ice-Mitigation-in-Marine-Environments1.pdf). The main difference between this strategy and the approach proposed in the present invention is that in the present invention PCMs with solid-liquid phase changes, which generally have higher enthalpies of fusion and crystallization, are used. Furthermore, by contemplating the use of confined PCMs, the proposed approach does not entail significant changes in volume of the PCMs when they are included in wind-driven power generator materials during the phase change in the PCM, thereby preventing possible formations of cracking in said materials during use.

Despite the needs in the state of the art, the use of PCMs as an anti-freeze solution in wind-driven power generators has not been described up until now.

Here in the present invention, the authors contemplate for the first time the use of PCM materials of this type as energy storage means in wind-driven power generator materials, mainly in the blades, to delay icing or to cause de-icing.

The authors of the present invention have been able to demonstrate based on important research work that incorporating PCMs into the coating or structural material of the different wind-driven power generator components, under specific conditions, delays icing, therefore increasing the AEP.

To that end, they have developed a method that allows incorporating PCMs into different wind-driven power generator components for the purpose of optimally delaying icing or causing de-icing.

In the developed method, PCMs that are used can either be confined in capsules (organic or inorganic) or organic supports can be impregnated with same in order to prevent the PCM from exuding during the phase change. The possibility that the PCMs, whether confined or not, can be anchored to the material of different wind-driven power generator components through reversible or irreversible covalent bonds is also contemplated. The PCMs can be incorporated into the paint or coating covering different wind-driven power generator elements; into the material forming the internal structure of different wind-driven power generator elements; into the putty (material for shaping defects identified once the blade is taken out of the mold) or as a thin layer deposited on the surface by means of spraying.

### Object of the Invention

In a first aspect, the present invention contemplates the use of PCMs to delay icing or to cause de-icing in different wind-driven power generator elements.

In a second aspect, the method for delaying icing or causing de-icing in different wind-driven power generator elements based on the use of phase change materials (PCMs) is contemplated.

### Brief Description of the Drawings

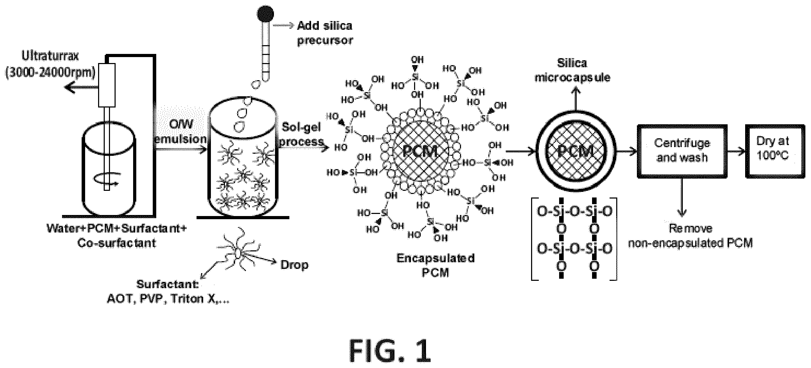

Figure 1 shows a diagram of the in-situ phase change material (PCM) encapsulation process.
Figure 2 shows PCM crystallization and the theoretical working of the paint with PCMs added thereto.

### Description of the Invention

Based on the icing problems existing in the state of the art, especially in connection with wind-driven power generators, and particularly in the blades thereof, the authors of the present invention have developed a method for delaying icing or causing de-icing in different wind-driven power generator elements based on the use of phase change materials (PCMs).

Therefore, in a main embodiment of the present invention the use of both synthesized and commercial PCMs to delay icing or to cause de-icing in different wind-driven power generator elements is contemplated for the first time.

The PCMs used in the present invention must comply with the following requirements:
- The material has to be:
   o Confined either by means of an organic support being impregnated with same or by means of being encapsulated in organic or inorganic micro/nanocapsules, or
   o Chemically anchored to the material of different wind-driven power generator elements to prevent it exuding. In this case, the material may or may not be confined.
- The crystallization starting temperature must be in the range of -10°C to 10°C for a standard site, crystallization being kept in the highest possible range.
- The latent heat of crystallization and fusion must be the highest possible (the higher the latent heat, the greater the storage capacity).
- When the PCMs are confined, they must be able to be readily dispersed in the materials used for manufacturing the wind-driven power generator, such as in the base paint or structural resin or putty of wind-driven power generator components, for example.

There are PCMs commercially available on the market today; however, synthesized PCMs (paraffins) can also be used in the present invention provided that the aforementioned requirements are met. The synthesized or commercial PCMs are selected from organic paraffins, esters, alcohols, acids, eutectic mixtures or hydrated inorganic salts.

In another main aspect of the invention, the method for delaying icing or causing de-icing in different wind-driven power generator components based on the use of phase change materials (PCMs) (hereinafter method of the invention) is contemplated.

The method of the invention comprises the following steps:
a) obtaining the PCMs; and
b) incorporating the PCMs into different wind-driven power generator elements (such as, for example: blades, nacelle, instruments, generator, converter, thermal conditioning elements, etc).

As mentioned above, the obtained PCMs may be confined or not. If they are not confined, the incorporation (b) of the PCMs is carried out by means of chemically anchoring them to the material of different wind-driven power generator elements through reversible or irreversible covalent bonds. In the case of confined PCMs, chemical anchoring is optional.

In a particular embodiment of the method of the invention, the obtained PCMs are confined. Preferably, the confinement of the PCMs can be carried out by means of:
i) encapsulating the PCMs in organic or inorganic nano- or micrometric capsules, or
ii) impregnating an organic support with PCMs, such as zeolites, bentonites, or even graphite-type carbonaceous materials.

In an even more preferred embodiment of the method of the invention, the confinement of the PCMs is carried out by means of nano-microencapsulation thereof. More preferably, said encapsulation of PCMs is based on the use of inorganic nano-microcapsules, with crystallization starting in the range -10°C to 10°C.

The PCM is encapsulated in nano/micrometric capsules prepared by means of inert materials such as silica, titanium or zirconium (or mixtures thereof). These capsules have suitable shapes and sizes customized for the needs of the PCMs to be encapsulated in order to thereby introduce them into desired working systems, avoiding leakages. Furthermore, use of materials of this type improves the thermal efficiency of the working area due to its small size, having an associated increase in the contact surface and, therefore, improving thermal working.

The confinement of the PCMs in inorganic nano/microcapsules comprises the following steps:
A. creating an emulsion or microemulsion, such as, for example, oil in water (O/W), water in oil (W/O) or W/O/W or O/W/O double emulsion type emulsions. For the particular case of an O/W emulsion, the process would comprise the following steps:
   1) obtaining a mixture comprising a surfactant agent or mixture of surfactants, PCMs and water, at a working temperature comprised between 25-200°C, wherein the percentage by weight of the surfactant in the mixture is 1-30% and the percentage by weight of PCMs in the mixture is 1-50% and
   2) performing mechanical or ultrasonic agitation of the mixture obtained in 1), until obtaining the emulsion consisting of drops of PCM in water,
B. adding an inorganic precursor dropwise to the emulsion/microemulsion created in A) for forming an inorganic microcapsule around each drop of PCM by means of sol-gel processes,
C. cleaning the capsules formed in B) with a solvent to remove the surfactant and non-encapsulated PCM residues,
D. drying the capsules obtained after step C) in a vacuum oven for 4-24 hours at a temperature between 25-300°C, and
E. obtaining inorganic nano/microcapsules filled with PCM with a size comprised between 30 nm and 30 µm.

In detail, to carry out the encapsulation of PCMs (e.g. organic paraffins, esters, alcohols, acids or eutectic mixtures or hydrated inorganic salts), according to the described method, it is necessary to create an emulsion or microemulsion, such as oil in water (O/W), water in oil (W/O) or W/O/W or O/W/O double emulsion type emulsions, for example, depending on the nature of the PCM. To form the emulsion, it is necessary to add anionic, cationic, or non-ionic surface active or surfactant agents, such as Triton X, Span 80, Span 60, Tween 20, Tween 80, PVP (polyvinylpyrrolidone), AOT (dioctyl sodium sulfosuccinate), for example, or a mixture of surfactants which are selected depending on the PCM to be encapsulated and which aid in forming the emulsion and stabilizing same, since they reduce the surface tension of the liquid obtaining the desired drop size. The drop size can therefore be modulated and is related to the capsule size obtained, and this size will be defined depending on the matrix in which the capsule is to be dispersed. The temperature can also help in stabilizing the emulsion or microemulsion, so it is advisable to work at temperatures between 25-200°C. The size of the drops formed in the emulsion or microemulsion largely depends on the surfactant-PCM/water ratio, the percentage by weight of the surfactant in the mixture being between 1-30% and the percentage of PCMs in the mixture between 1-50%.

In addition to the surfactants and surfactant-PCM/water ratios, the agitation used to develop the emulsion/microemulsion is also important. To that end, as mentioned above, in this particular embodiment of the method of the present invention both mechanical agitation and ultrasonic agitation are contemplated. Depending on the desired drop size, more or fewer revolutions will be used during agitation, mechanical agitation preferably being comprised between 3000 and 24000 rpm and ultrasonic agitation preferably being comprised between 20 and 70 W, until obtaining the emulsion consisting of drops of PCM in water.

Once the emulsion is developed with the selected phase change material and the optimal surfactants, the next step of the process is to add the inorganic precursor dropwise in the emulsion/microemulsion created with the desired PCM. The precursor can be of different inert materials, such as silica, titanium or zirconium.

In preferred embodiments, silicon precursors such as TEOS (tetraethyl orthosilicate), TMOS (tetramethyl orthosilicate), SiCl₄ (silicon tetrachloride), GPTMS (3-glycidoxypropyl)methyldiethoxysilane), APTMS ((3-aminopropyl)-diethoxymethylsilane), MPTMS (3-methacryloxy-propyl-trimethoxy-silane), MTMS (methyltrimethoxysilane), HDTMS (hexadecyl-trimethoxy-silane), among others, are used.

Before being added to the emulsion, the precursor may or may not be hydrolyzed by adding water and a catalyst (e.g., hydrochloric acid, acetic acid, nitric acid) at an optimal concentration that acidifies the solution until reaching a pH between 1 and 4 so that said hydrolysis can be carried out.

Once the precursor is hydrolyzed, it is added to the emulsion dropwise so that it gradually surrounds the drops of PCM created. The hydrolyzed precursor surrounds the drops of PCM of the emulsion, and as a result of the surfactant hydrogen bonds are created, which bring about the formation of a capsule around each drop. Once the condensation reaction has ended, the capsules formed are cleaned with the suitable solvent (which will be selected based on the nature of the PCM and it must be soluble in said solvent), such as water, ethanol, propanol, ether, acetone, among others, to remove the PCM residues that have not been encapsulated, and it is left to dry in an oven between 4-24 hours at a temperature between 25-300°C

To study the drop size of the emulsions, a light scattering system that allows, by means of laser, studying the drop size obtained in each emulsion, such as Masterziser 2000, can be used. Therefore, capsules of the desired size could be synthesized by means of controlling drop size.

To characterize the capsules obtained, primarily a differential scanning calorimeter (DSC) (e.g., Mettler Toledo HP DSC827) is used to study the storage energies and temperatures of fusion-crystallization, as well as the stability of the materials developed over several consecutive cooling-heating cycles.

This particular embodiment of the method of the invention allows obtaining synthesized or commercial encapsulated PCMs having the highest possible optimal enthalpies of crystallization (ΔHc) and fusion (ΔHm) so that a large amount of heat is released during the phase change, and suitable temperatures of crystallization (Tc) and fusion (Tm) so as to allow the development of paints working in the suitable temperature range, as described above. These PCMs allow reducing icing in different wind-driven power generator elements, particularly in wind-driven power generator blades, delaying the build-up of ice by about 15-30 minutes, depending on the type of PCMs and the technique used in the measurement, increasing the AEP.

Encapsulation of phase change materials (PCMs) based on the described method allows obtaining capsules comprised between 30 nm and 30 µm by means of combining the sol-gel technology with emulsion/microemulsion techniques, such as, for example, oil in water (O/W), water in oil (W/O) or W/O/W or O/W/O double emulsion type emulsions. The size and shape of the capsules to be synthesized can be controlled by means of this technique, which allows preparing customized capsules.

In step b) of the method of the present invention, the confined PCMs can be incorporated 1) into the paint or coating covering different wind-driven power generator elements; 2) into the material forming the internal structure of different wind-driven power generator elements (resin or fibers used in manufacturing the composites); 3) into the putty; or 4) as a thin layer on the surface thereof by means of spraying.

In the case of the paint or coating, when confined PCMs (organic paraffins, esters, alcohols, acids, eutectic mixtures or hydrated inorganic salts) are used, the confinement size must be less than 30 microns. In the case of the resin, used in the internal structure of different wind-driven power generator components, or the putty, when the PCMs (inorganic or organic) are confined, the allowed confinement size could be larger, even being capsules measuring 1 mm.

In the case of the putty, paint or coating of different wind-driven power generator components, the incorporation of the confined PCMs is carried out by means of the following steps:
- dispersing the confined PCMs in the putty or in the paint (or coating) covering different wind-driven power generator components at a percentage between 5 and 70% by weight, either through direct dispersion or through a pre-dispersion of the PCMs in a solvent compatible with the paint, and
- applying the dispersion to different wind-driven power generator components by means of putty knife, roller, brush, spray or immersion.

To reduce viscosity of the dispersion, a solvent (e.g. N-butylacetate, butanediol, etc.) compatible with the base of the paint and/or a thixotropic agent can furthermore be added and mixed with the solution for a time comprised between 2-15 min.

In the case of the resin, the incorporation is carried out by means of dispersing the confined PCMs by means of mechanical or ultrasonic methods. The resins will be used to prepare composite materials forming the inside of different wind-driven power generator elements by means of infusion methods, the use of pre-impregnated materials, hand lay up molding, resin transfer molding, pultrusion, in situ polymerization, etc.

In the case of the fibers used for manufacturing composites forming the inside of different wind-driven power generator elements, the incorporation is carried out by means of impregnating said fibers with a dispersion of confined PCMs or by means of immersing said fibers in a dispersion of confined PCMs.

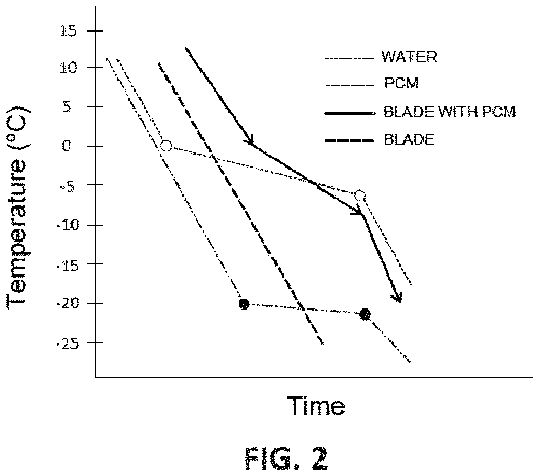

In preferred embodiments of the method of the invention, the PCMs (confined or by means of chemical anchoring) are used in wind-driven power generator blades. In this case, in the event of ice being generated, the PCM is melted and the temperature starts to drop, approaching the beginning of crystallization of the PCM between -10°C and 10°C. The drop in temperature of the blade with the PCM added thereto is reduced since the material releases its latent heat in order to become solid, maintaining the temperature in the range of its phase change (less pronounced slope compared with the blade "without the PCM added thereto", see Figure 2).

The present invention is additionally illustrated by means of the following examples, which do not seek to be limiting of the scope of the invention.

### Examples

### Example 1. Obtaining PCM-filled silica microcapsules by means of sol-gel technology starting from oil in water (O/W) emulsions

To develop the PCM capsules, between 0.1 and 2 g of high molecular weight polyvinyl alcohol (PVA) were dissolved in water at a temperature comprised between 25°C and 100°C. In addition, between 1 and 20 g of PCM (two types of PCMs, hexadecane and octadecane, were used), which were mixed at a temperature between 25°C and 100°C with a percentage of surfactant (Tween 80) between 1% and 50% with respect to the amount of PCM added (preferably between 20% and 40%), were weighed. Once the PVA solution was dissolved, it was added to the PCM solution dropwise and kept under agitation at 15000 rpm for a time between 1 and 4 h to form the PCM-water emulsion. While waiting for the indicated time, TEOS, GPTMS and acetic acid were mixed at a ratio of 1:0.5:0.05 and were left to agitate for a time between 1 and 3 h at a temperature between 25°C and 100°C for hydrolysis of the precursors to commence. After the indicated time, the reaction was cooled and was left to agitate. The solution was centrifuged, obtaining the PCM-filled silica microcapsules. Said capsules were washed several times with ethanol to remove the surfactant residues and PCM residues that had not been encapsulated. Finally, the solid obtained was dried in a vacuum oven between 8-24 hours at a temperature between 50-200°C.

### Example 2. Functionality test

### A.- Testing in Peltier

This test consisted of forming a water droplet on a panel painted with the reference coating without PCMs and with a coating with PCM capsules (5, 15 and 25% Paraffin Type 1 capsules and 10% Paraffin Type 2 capsules) (see Table 1).

The temperature was dropped in 5°C increments, remaining isothermal for 2-10 min until reaching -20°C. The measurement parameters were:
- Surface temperature
- Drop freezing time

**Table 1. Results of testing in Peltier**

| Peltier Temp. | Reference | Panel+Paint-5% Paraffin Type 1 | Panel+Paint-15% Paraffin Type 1 | Panel+Paint-25% Paraffin Type 1 | 10% Paraffin Type 2 |
|---|---|---|---|---|---|
| 25 | 25.2 | 23.5 | 23.2 | 23 | |
| 20 | 22.2 | 21.7 | 22.5 | 21.1 | |
| 15 | 18.9 | 19.5 | 20.3 | 18.8 | |
| 10 | 15.4 | 16 | 17.6 | 15.6 | |
| 5 | 12.3 | 13.5 | 14.7 | 13.3 | |
| 0 | 9 | 10.4 | 11.4 | 10.7 | |
| -5 | 5.8 | 8 | 9.8 | 8.5 | |
| -10 | 2.9 | 5.2 | 7.5 | 5.8 | |
| -15 | 0.5 | 2.7 | 5 | 3.7 | |
| -20 (t: 0) | -0.2 | 2 | 4.9 | 0.7 | |
| -20 (t: 5') | -1.4 | 0.7 | 2.9 | -1.9 | |
| -20 (t: 10') | -1.9 | 0.3 (three frozen drops) | 0.3 | -2 | |
| -20 (t: 15') | | | -0.3 (one frozen drop) | -2 | 1 frozen drop |
| -20 (t: 20') | | | -0.4 (three frozen drops) | -2.4 | 3 frozen drops |
| -20 (t: 25') | | | | -3.5 | |
| -20 (t: 30') | | | | -4.5 (the drop does not start to freeze) | |

According to the obtained results, the following was concluded:
- The PCMs are capable of delaying icing up to 20-30 minutes according to the type and % of PCMs used
- A reduced drop in surface temperature is also observed, corresponding to the action of the PCMs.

### B.- Testing in an environmental chamber

Tests were also conducted in an environmental chamber in order to check functionality according to the following methodology:
- Two drops of water were formed on each evaluated panel, the test starting at a temperature of 20°C and a relative humidity of between 40% and 60%. The temperature and humidity started to be reduced, monitoring the temperature on the surface of each specimen using to that end thermocouples placed on the surface of each specimen.
- The temperature ramp inside the chamber was in three steps: (I)
- Tamb => -5°C 2°C/min (around 10-20 min),
- Isothermal at -5°C (10-20 min)
- -5°C => -10°C (10-20 min)

**Table 2. Results of testing in the environmental chamber**

| Testing time | Paraffin Type 1 (5%) | Paraffin Type 1 (10%) | Paraffin Type 2 (15%) | Paraffin Type 2 (25%) | Ref Paint |
|---|---|---|---|---|---|
| Start | 19.8 | 20.4 | 20.4 | 20.4 | 20.5 |
| 15 min (0°C) | 5.7 | 5.2 | 6.4 | 4.8 | 3.8 |
| (-5°C) t = 0 | 0.5 | 0.4 | 1.1 | -0.5 | -1.2 |
| (-5°C) t = 5 min | -2.8 | -2.8 | -2.8 | -3.8 | -4.1 |
| (-5°C) t = 10 min | -3.8 | -3.4 | -3.8 | -4.1 | -4.3 |
| (-5°C) t = 15 min | -4.9 | -4.6 | -4.7 | -5 | -5.2 |
| (-10°C) t = 0 | -7.8 | -7.6 | -7.6 | -8 | -8.3 |
| (-10°C) t = 10 min | -8.5 | -8.5 | -8.5 | -8.7 | -8.8 |
| (-10°C) t = 15 min | -8.4 | -8.5 | -8.6 | -8.7 | -8.8 |
| (-15°C) t = 0 | -11.6 | -11.7 | -11.4 | -12 | -12.3 |

Similarly to the preceding case, it was observed that the freezing of the water droplet was delayed and that the temperature on the surface was higher due to the release of heat from the PCM, the following order of improvement being established: the paint with the best behavior in the environmental chamber was the one that contained a higher percentage of Paraffin Type 2 capsules, followed by paints with 15% Paraffin Type 2 capsules and 10% Paraffin Type 1 capsules, all having a very similar behavior, then the paint with 5% Paraffin Type 1 capsules, and finally, the one showing the worst behavior is the reference paint without any PCMs added thereto.

## Claims

1. Use of phase change materials (PCMs) to delay icing or to cause de-icing in different elements of a wind-driven power generator,
wherein the PCMs are confined or chemically anchored in materials of the elements of the wind-driven power generator,
wherein the PCMs are configured to undergo a solid-liquid phase change so as to delay icing or to cause de-icing in said different elements of the wind-driven power generator.

2. Use according to claim 1, wherein the PCMs are configured to undergo a solid-liquid phase change with a crystallization starting temperature in the range of -10°C to 10°C.

3. Use according to claim 1 or 2, wherein the PCMs are confined in organic or inorganic micro/nanocapsules or an organic support is impregnated with same.

4. Use according to any of claims 1 to 3, wherein the PCMs are chemically anchored to the material forming different wind-driven power generator elements.

5. Method for delaying icing or causing de-icing in different elements of a wind-driven power generator based on the use of phase change materials (PCMs), said method comprising the following steps:
a) obtaining the PCMs; and
b) incorporating the obtained PCMs into different elements of the wind-driven power generator,
wherein the PCMs are confined or chemically anchored in materials of the wind-driven power generator elements,
wherein the PCMs are configured to undergo a solid-liquid phase change. so as to delay icing or cause de-icing in said different elements of the wind-driven power generator.

6. Method according to claim 5, wherein the PCMs are configured to undergo a solid-liquid phase change with a crystallization starting temperature in the range of -10°C to 10°C.

7. Method according to claim 5 or 6, wherein the confinement of the PCMs can be carried out by means of:
i) encapsulating the PCMs in organic or inorganic nano/microcapsules, or
ii) impregnating an organic support with PCMs.

8. Method according to claim 7, wherein the confinement of the PCMs is carried out in inorganic nano/microcapsules.

9. Method according to claim 8, wherein the confinement of the PCMs in inorganic nano/microcapsules comprises the following steps:
A. creating an oil-in-water (O/W) emulsion comprising:
1) obtaining a mixture comprising a surfactant agent or mixture of surfactants, PCMs and water, at a working temperature comprised between 25-200°C, wherein the percentage by weight of the surfactant in the mixture is 1-30% and the percentage by weight of PCMs in the mixture is 1-50%, and
2) performing mechanical or ultrasonic agitation of the mixture obtained in 1), until obtaining the emulsion consisting of drops of PCM in water;
B. adding an inorganic precursor dropwise to the emulsion created in A) for forming an inorganic nano/microcapsule around each drop of PCM by means of sol-gel processes,
C. cleaning the nano/microcapsules formed in B) with a solvent to remove surfactant and non-encapsulated PCM residues,
D. drying the capsules obtained after step C) in a vacuum oven for 4-24 hours at a temperature between 25-300°C, and
E. obtaining inorganic nano/microcapsules filled with PCM with a size comprised between 30 nm and 30 µm.

10. Method according to claim 9, wherein prior to step B), said method comprises a step A') in which the inorganic precursor is hydrolyzed by means of adding water and a catalyst at an optimal concentration that acidifies the solution to a pH between 1 and 4.

11. Method according to any of claims 5 to 10, wherein in step b) the PCMs are incorporated by means of chemical anchoring to the material of different wind-driven power generator elements.

12. Method according to any of claims 5 to 10, wherein in step b) the confined PCMs are incorporated into the paint or coating or putty of different wind-driven power generator elements.

13. Method according to claim 12, wherein the incorporation of the confined PCMs into the paint or coating or putty of different wind-driven power generator elements is carried out by means of the following steps:
- dispersing the confined PCMs in the paint or coating or putty coating different wind-driven power generator elements at a percentage between 10 and 70% by weight, and
- applying the dispersion to different wind-driven power generator components by means of putty knife, roller, brush, spray or immersion.

14. Method according to any of claims 5 to 10, wherein in step b) the confined PCMs are incorporated into the structural material of different wind-driven power generator elements.

15. Method according to claim 14, wherein the incorporation into the structural material is carried out by means of dispersing the confined PCMs in the resins used for manufacturing the composites forming the inside of different wind-driven power generator elements.

16. Method according to claim 14, wherein the incorporation into the structural material is carried out by means of spraying a dispersion of the confined PCMs onto the fibers used for manufacturing the composites forming the inside of different wind-driven power generator elements, or by means of immersing said fibers in a dispersion of the confined PCMs.

17. Method according to any of claims 5 to 10, wherein the confined PCMs are deposited as a thin layer on the surface of different wind-driven power generator elements by means of spraying.

18. Method according to any of claims 5 to 17, wherein the PCMs are incorporated into wind-driven power generator blades.

## Patentansprüche

1. Verwendung von Phasenwechselmaterialien (Phase Change Materials, PCMs) zur Verzögerung von Vereisung oder zur Verursachung von Enteisung in verschiedenen Elementen eines Windkraftgenerators,
wobei die PCM in Materialien von den Elementen des Windkraftgenerators eingeschlossen oder chemisch verankert sind, wobei die PCM dazu ausgelegt sind, einen fest/flüssig-Phasenwechsel zur Verzögerung von Vereisung oder zur Verursachung von Enteisung in den verschiedenen Elementen des Windkraftgenerators einzugehen.

2. Verwendung nach Anspruch 1, wobei die PCM dazu ausgelegt sind, einen fest/flüssig-Phasenwechsel bei einer Kristallisationsstarttemperatur im Bereich von -10 °C bis 10 °C einzugehen.

3. Verwendung nach Anspruch 1 oder 2, wobei die PCM in organischen oder anorganischen Mikro- bzw. Nanokapseln eingeschlossen werden oder ein organischer Träger mit diesen imprägniert wird.

4. Verwendung nach einem der Ansprüche 1 bis 3, wobei die PCM chemisch an das verschiedene Windkraftgeneratorelemente bildende Material verankert sind.

5. Verfahren zur Verzögerung von Vereisung oder zur Verursachung von Enteisung in verschiedenen Elementen eines Windkraftgenerators, das auf der Verwendung von Phasenwechselmaterialien (PCM) beruht, wobei das Verfahren die folgenden Schritte umfasst:
a) Erhalten der PCM; und
b) Einarbeiten der erhaltenen PCM in verschiedene Elemente des Windkraftgenerators,
wobei die PCM in Materialien des Windkraftgeneratorelements eingeschlossen oder chemisch verankert sind,
wobei die PCM dazu ausgelegt sind, einen fest/flüssig-Phasenwechsel zur Verzögerung von Vereisung oder zur Verursachung von Enteisung in den verschiedenen Elementen des Windkraftgenerators einzugehen.

6. Verfahren nach Anspruch 5, wobei die PCM dazu ausgelegt sind, einen fest/flüssig-Phasenwechsel bei einer Kristallisationsstarttemperatur im Bereich von -10 °C bis 10 °C einzugehen.

7. Verfahren nach Anspruch 5 oder 6, wobei das Einschließen der PCM durch die folgenden Mittel erfolgen kann:
i) Einkapseln der PCM in organischen oder anorganischen Nano- bzw. Mikrokapseln oder
ii) Imprägnieren eines organischen Trägers mit PCM.

8. Verfahren nach Anspruch 7, wobei das Einschließen der PCM in anorganischen Nano- bzw. Mikrokapseln erfolgt.

9. Verfahren nach Anspruch 8, wobei das Einschließen der PCM in anorganischen Nano- bzw. Mikrokapseln die folgenden Schritte umfasst:
A. Erzeugen einer Öl-in-Wasser(Ö/W)-Emulsion, umfassend:
1) Erhalten eines ein grenzflächenaktives Mittel oder ein Gemisch von Tensiden, PCM und Wasser umfassenden Gemisches bei einer zwischen 25-200 Gew.-% liegenden Arbeitstemperatur, wobei der Gewichtsprozentanteil des Tensids in dem Gemisch 1-30 % beträgt und der Gewichtsprozentanteil von PCM in dem Gemisch 1-50 % beträgt, und
2) Durchführen von mechanischer oder ultraschallinduzierter Bewegung des in 1) erhaltenen Gemisches bis zum Erhalt der aus Tropfen von PCM in Wasser bestehenden Emulsion;
B. tropfenweises Zugeben eines anorganischen Vorläufers zu der in A) erzeugten Emulsion zur Bildung einer anorganischen Nano- bzw. Mikrokapsel um jeden Tropfen von PCM mittels eines Sol-Gel-Prozesses,
C. Reinigen der in B) gebildeten Nano- bzw. Mikrokapseln mit einem Lösungsmittel zur Entfernung von Tensid und nicht eingekapselten PCM-Resten,
D. 4- bis 24-stündiges Trocknen der nach Schritt C) erhaltenen Kapseln in einem Vakuumofen bei einer Temperatur zwischen 25-300 °C und
E. Erhalten von mit PCM gefüllten Nano- bzw. Mikrokapseln mit einer zwischen 30 nm und 30 µm liegenden Größe.

10. Verfahren nach Anspruch 9, wobei das Verfahren vor Schritt B) einen Schritt A') umfasst, in dem der anorganische Vorläufer mittels Zugabe von Wasser und einem optimal konzentrierten Katalysator, der die Lösung auf einen pH-Wert zwischen 1 und 4 ansäuert, hydrolysiert wird.

11. Verwendung nach einem der Ansprüche 5 bis 10, wobei die PCM in Schritt b) mittels chemischer Verankerung an das Material von verschiedenen Windkraftgeneratorelementen eingearbeitet werden.

12. Verwendung nach einem der Ansprüche 5 bis 10, wobei die eingeschlossenen PCM in Schritt b) in das Anstrichmittel oder die Beschichtung oder die Spachtelmasse von verschiedenen Windkraftgeneratorelementen eingearbeitet werden.

13. Verfahren nach Anspruch 12, wobei die Einarbeitung der eingeschlossenen PCM in das Anstrichmittel oder die Beschichtung oder die Spachtelmasse von verschiedenen Windkraftgeneratorelementen mittels der folgenden Schritte erfolgt:
- Dispergieren der eingeschlossenen PCM in dem Anstrichmittel oder der Beschichtung oder der Spachtelbeschichtung verschiedener Windkraftgeneratorelemente mit einem prozentualen Anteil zwischen 10 und 70 Gewichts-% und
- Auftragen der Dispersion auf verschiedene Windkraftgeneratorkomponenten mittels Spachtelmesser, Walze, Bürste, Aufsprühen oder Tauchen.

14. Verfahren nach einem der Ansprüche 5 bis 10, wobei die eingeschlossenen PCM in Schritt b) in das Baumaterial von verschiedenen Windkraftgeneratorelementen eingearbeitet werden.

15. Verfahren nach Anspruch 14, wobei die Einarbeitung in das Baumaterial erfolgt, indem die eingeschlossenen PCM in den Harzen dispergiert werden, die zur Herstellung der Verbundwerkstoffe, die das Innere von verschiedenen Windkraftgeneratorelementen bilden, verwendet werden.

16. Verfahren nach Anspruch 14, wobei die Einarbeitung in das Baumaterial erfolgt, indem eine Dispersion der eingeschlossenen PCM auf Fasern aufgesprüht wird, die zur Herstellung der Verbundwerkstoffe, die das Innere von verschiedenen Windkraftgeneratorelementen bilden, verwendet werden, oder indem die Fasern in eine Dispersion der eingeschlossenen PCM getaucht werden.

17. Verfahren nach einem der Ansprüche 5 bis 10, wobei die eingeschlossenen PCM mittels Aufsprühen als eine dünne Schicht auf die Oberfläche verschiedener Windkraftgeneratorelemente abgeschieden werden.

18. Verfahren nach einem der Ansprüche 5 bis 17, wobei die PCM in Schritt b) in Blätter von Windkraftgeneratoren eingearbeitet werden.

## Revendications

1. Utilisation de matériaux à changement de phase (PCM) pour retarder un givrage ou pour provoquer un dégivrage dans différents éléments d'un générateur d'énergie à entraînement éolien,
dans laquelle les PCM sont confinés ou chimiquement ancrés dans des matériaux des éléments du générateur d'énergie à entraînement éolien,
dans laquelle les PCM sont configurés pour subir un changement de phase solide-liquide de façon à retarder un givrage ou à provoquer un dégivrage dans lesdits différents éléments du générateur d'énergie à entraînement éolien.

2. Utilisation selon la revendication 1, dans laquelle les PCM sont configurés pour subir un changement de phase solide-liquide ayant une température de début de cristallisation dans la plage de -10 °C à 10 °C.

3. Utilisation selon la revendication 1 ou 2, dans laquelle les PCM sont confinés dans des micro/nanocapsules organiques ou inorganiques ou un support organique est imprégné avec ceux-ci.

4. Utilisation selon l'une quelconque des revendications 1 à 3, dans laquelle les PCM sont chimiquement ancrés au matériau formant différents éléments de générateur d'énergie à entraînement éolien.

5. Procédé pour retarder un givrage ou provoquer un dégivrage dans différents éléments d'un générateur d'énergie à entraînement éolien basé sur l'utilisation de matériaux à changement de phase (PCM), ledit procédé comprenant les étapes suivantes :
a) obtenir les PCM ; et
b) incorporer les PCM obtenus dans différents éléments du générateur d'énergie à entraînement éolien,
dans lequel les PCM sont confinés ou chimiquement ancrés dans des matériaux des éléments de générateur d'énergie à entraînement éolien,
dans lequel les PCM sont configurés pour subir un changement de phase solide-liquide de façon à retarder un givrage ou provoquer un dégivrage dans lesdits différents éléments du générateur d'énergie à entraînement éolien.

6. Procédé selon la revendication 5, dans lequel les PCM sont configurés pour subir un changement de phase solide-liquide ayant une température de début de cristallisation dans la plage de -10 °C à 10 °C.

7. Procédé selon la revendication 5 ou 6, dans lequel le confinement des PCM peut être effectué au moyen de :
i) l'encapsulation des PCM dans des nano/microcapsules organiques ou inorganiques, ou
ii) l'imprégnation d'un support organique avec des PCM.

8. Procédé selon la revendication 7, dans lequel le confinement des PCM est effectué dans des nano/microcapsules inorganiques.

9. Procédé selon la revendication 8, dans lequel le confinement des PCM dans des nano/microcapsules inorganiques comprend les étapes suivantes :
A. créer une émulsion huile dans l'eau (O/W) comprenant :
1) l'obtention d'un mélange comprenant un agent tensioactif ou un mélange de tensioactifs, des PCM et de l'eau, à une température de travail comprise entre 25 et 200 °C, dans lequel le pourcentage en poids du tensioactif dans le mélange est de 1 à 30 % et le pourcentage en poids des PCM dans le mélange est de 1 à 50 %, et
2) la réalisation d'une agitation mécanique ou ultrasonore du mélange obtenu en 1), jusqu'à l'obtention de l'émulsion constituée de gouttes de PCM dans l'eau ;
B. ajouter un précurseur inorganique goutte à goutte à l'émulsion créée en A) pour former une nano/microcapsule inorganique autour de chaque goutte de PCM au moyen de processus sol-gel,
C. nettoyer les nano/microcapsules formées en B) avec un solvant pour éliminer les résidus de tensioactif et de PCM non encapsulés,
D. sécher les capsules obtenues après l'étape C) dans une étuve à vide pendant 4 à 24 heures à une température entre 25 et 300 °C, et
E. obtenir des nano/microcapsules inorganiques remplies de PCM ayant une taille comprise entre 30 nm et 30 µm.

10. Procédé selon la revendication 9, dans lequel avant l'étape B), ledit procédé comprend une étape A') dans laquelle le précurseur inorganique est hydrolysé au moyen de l'ajout d'eau et d'un catalyseur à une concentration optimale qui acidifie la solution jusqu'à un pH entre 1 et 4.

11. Procédé selon l'une quelconque des revendications 5 à 10, dans lequel à l'étape b) les PCM sont incorporés au moyen d'un ancrage chimique au matériau de différents éléments de générateur d'énergie à entraînement éolien.

12. Procédé selon l'une quelconque des revendications 5 à 10, dans lequel à l'étape b) les PCM confinés sont incorporés dans la peinture ou le revêtement ou le mastic de différents éléments de générateur d'énergie à entraînement éolien.

13. Procédé selon la revendication 12, dans lequel l'incorporation des PCM confinés dans la peinture ou le revêtement ou le mastic de différents éléments de générateur d'énergie à entraînement éolien est effectuée au moyen des étapes suivantes :
- disperser les PCM confinés dans la peinture ou le revêtement ou le mastic revêtant différents éléments de générateur d'énergie à entraînement éolien à un pourcentage entre 10 et 70 % en poids, et
- appliquer la dispersion sur différents composants de générateur d'énergie à entraînement éolien au moyen d'un couteau à mastic, d'un rouleau, d'un pinceau, d'une pulvérisation ou d'une immersion.

14. Procédé selon l'une quelconque des revendications 5 à 10, dans lequel à l'étape b) les PCM confinés sont incorporés dans le matériau structurel de différents éléments de générateur d'énergie à entraînement éolien.

15. Procédé selon la revendication 14, dans lequel l'incorporation dans le matériau structurel est effectuée au moyen de la dispersion des PCM confinés dans les résines utilisées pour la fabrication des composites formant l'intérieur de différents éléments de générateur d'énergie à entraînement éolien.

16. Procédé selon la revendication 14, dans lequel l'incorporation dans le matériau structurel est effectuée au moyen de la pulvérisation d'une dispersion des PCM confinés sur les fibres utilisées pour la fabrication des composites formant l'intérieur de différents éléments de générateur d'énergie à entraînement éolien, ou au moyen de l'immersion desdites fibres dans une dispersion des PCM confinés.

17. Procédé selon l'une quelconque des revendications 5 à 10, dans lequel les PCM confinés sont déposés sous la forme d'une couche mince sur la surface de différents éléments de générateur d'énergie à entraînement éolien au moyen d'une pulvérisation.

18. Procédé selon l'une quelconque des revendications 5 à 17, dans lequel les PCM sont incorporés dans des pales de générateur d'énergie à entraînement éolien.
